# EUROPÄISCHE PATENTSCHRIFT

(11) **EP 1 932 650 B1**
(45) Veröffentlichungstag und Bekanntmachung des Hinweises auf die Patenterteilung: **09.06.2010**
(21) Anmeldenummer: 06025673.2
(22) Anmeldetag: 12.12.2006
(51) Int. Cl.: B29C 65/06

(54) **Verfahren und Vorrichtung zum Herstellen von Gehrungs-Eckverbindungen durch Vibrationsschweissen**
Process and apparatus for manufacturing mitre joints by vibration welding
Procédé et dispositif pour manufacturer des liaisons en onglet par soudage d'oscillation

(43) Veröffentlichungstag der Anmeldung: 18.06.2008
(73) Patentinhaber: BRANSON ULTRASCHALL, 63128 Dietzenbach (DE); Fentech AG, 9008 St. Gallen (CH)
(72) Erfinder: Vetter, Jörg, 64839 Münster (DE); Eugster, Peter, 8104 Weiningen ZH (CH); Bruderer, Beat, 8046 Zürich (CH)
(74) Vertreter: Hauck Patent- und Rechtsanwälte

(56) Entgegenhaltungen:
- EP-A- 1 447 167
- WO-A-2005/009664
- DE-A1- 19 938 099

## Beschreibung

Die vorliegende Erfindung betrifft ein Verfahren und eine Vorrichtung zum Herstellen einer Gehrungs-Eckverbindung zwischen zwei Bauteilen durch Vibrationsschweißen.

Aus EP 1 207 994 B1, EP 1 447 167 A1, EP 1 648 648 A1 und EP 1 656 231 A1 sind Vibrationsschweißverfahren zum Herstellen von Gehrungs-Eckverbindungen zwischen Rahmenteilen eines rechteckigen Rahmens, insbesondere eines Flügelrahmens für Fenster und Türen, bekannt. Bei diesen Vibrationsschweißverfahren werden die Rahmenteile durch die Schwingköpfe von Vibrationsschweißmaschinen derart in Schwingungen versetzt, dass die aneinander anliegenden Gehrungsflächen in den ortsfesten Gehrungsebenen (Fügeebenen) unter Schweißdruck gegenphasig schwingen, um eine Reibschweißverbindung einzugehen. Bei diesen gegenphasigen Schwingungen der aneinander anliegenden Gehrungsflächen handelt es sich um Orbitalbewegungen wie zum Beispiel kreis- und ellipsenförmige Bewegungen, die im Extremfall auch geradlinige Bewegungen sein können. Da diese Bewegungen in den ortsfesten Gehrungsebenen und somit schräg zur Längsrichtung der Rahmenteile erfolgen, müssen auch die Schwingköpfe schräg zur Längs- und Querrichtung der Rahmenteile angeordnet werden.

Aus diesen Druckschriften ist es ferner bekannt, die vier Gehrungs-Eckverbindungen eines Rahmens gleichzeitig herzustellen, indem acht an den Eckbereichen des Rahmens angeordnete Schwingköpfe synchron zueinander betrieben werden.

Aus DE 199 38 099 A1 ist ein ähnliches Vibrationsschweißverfahren zum Herstellen von Eckverbindungen eines Rahmens bekannt, bei der die Rahmenteile in lineare Schwingungen senkrecht zur Rahmenebene versetzt werden, um die aneinander anliegenden Gehrungsflächen der Rahmenteile aneinander zur reiben und dadurch zu verschweißen. Auch bei diesem Vibrationsschweißverfahren erfolgen die Relativbewegungen der aneinander anliegenden Gehrungsflächen der Rahmenteile in den ortsfesten Gehrungsebenen an den vier Ecken des Rahmens.

### Zusammenfassung der Erfindung

Der vorliegenden Erfindung liegt die Aufgabe zugrunde, ein Verfahren und eine Vorrichtung zum Herstellen einer Gehrungs-Eckverbindung zwischen zwei Bauteilen durch Vibrationsschweißen zu schaffen, bei denen die Schwingungsform der zum Herstellen der Schweißverbindungen erforderlichen Schwingungen der Bauteile möglichst einfach ist.

Das Verfahren und die Vorrichtung gemäß der Erfindung zum Lösen dieser Aufgabe sind in dem Patentanspruch 1 bzw. Patentanspruch 6 definiert.

Erfindungsgemäß werden die beiden Bauteile während des Schweißvorganges in aufeinander senkrecht stehende geradlinige translatorische Schwingungen versetzt, deren Phasen so aufeinander abgestimmt sind, dass die Gehrungsflächen der beiden Bauteile quer zu der ortsfesten Gehrungsebene und durch diese hindurch schwingen, wobei sie unter einem vorgegebenen Schweißdruck in Anlage bleiben.

Hierbei werden die translatorischen Schwingungen der beiden Bauteile zweckmäßigerweise so synchronisiert, dass ihre Frequenzen und Amplituden gleich sind.

Wird das erfindungsgemäße Verfahren zum Herstellen von Eckverbindungen zwischen Bauteilen verwendet, deren Längserstreckung größer als ihre Quererstreckung ist, so können die translatorischen Schwingungen der beiden Bauteile entweder in ihren Längsrichtungen oder in ihren Querrichtungen verlaufen.

Ein wesentlicher Vorteil der Erfindung besteht darin, dass die miteinander zu verbindenden Bauteile ausschließlich in geradlinige translatorische Schwingungen versetzt werden, was die Ausbildung und Anordnung der hierfür erforderlichen Schwingköpfe entsprechend vereinfacht.

Bei dem erfindungsgemäßen Verfahren wird der zum Herstellen der Schweißverbindung erforderliche Schweißdruck dadurch erzeugt, dass auf jedes der Bauteile eine Kraft ausgeübt wird, die senkrecht zu der Schwingrichtung des jeweiligen Bauteils verläuft. Diese Kräfte werden zweckmäßigerweise über die Schwingköpfe auf die schwingenden Bauteile übertragen.

Das Verfahren und die Vorrichtung gemäß der Erfindung eignen sich besonders zum Herstellen von Gehrungs-Eckverbindungen eines rechteckigen Rahmens wie eines Flügel- oder Blendrahmens für Fenster, Türen, Jalousienläden oder dergleichen. Grundsätzlich lässt sich die Erfindung jedoch überall dort einsetzen, wo zwei oder mehr Bauteile an Gehrungsflächen miteinander zu verbinden sind, zum Beispiel im Möbelbau.

Weitere vorteilhafte Ausgestaltungen der Erfindung gehen aus den abhängigen Patentansprüchen hervor.

### Kurze Beschreibung der Zeichnungen

Anhand der beigefügten Zeichnungen werden weitere Einzelheiten und Vorteile der vorliegenden Erfindungen erläutert. Es zeigt:
Figuren 1 bis 3 schematische Darstellungen einer Gehrungs-Eckverbindung in unterschiedlichen Stellungen während ihrer Verschweißung;
Figur 4 eine schematische Draufsicht auf eine Vibrationsschweißanlage zum Herstellen von Gehrungs-Eckverbindungen eines aus vier Rahmenteilen bestehenden Rahmens;
Figur 5 eine der Figur 4 entsprechende Darstellung zum Veranschaulichen der Verstellbarkeit der Vibrationsschweißanlage zum Bearbeiten von Rahmen unterschiedlicher Größe;
Figur 6 eine schematische Seitenansicht der Vibrationsschweißanlage in Figur 5.

### Detaillierte Beschreibung der bevorzugten Ausführungsbeispiel

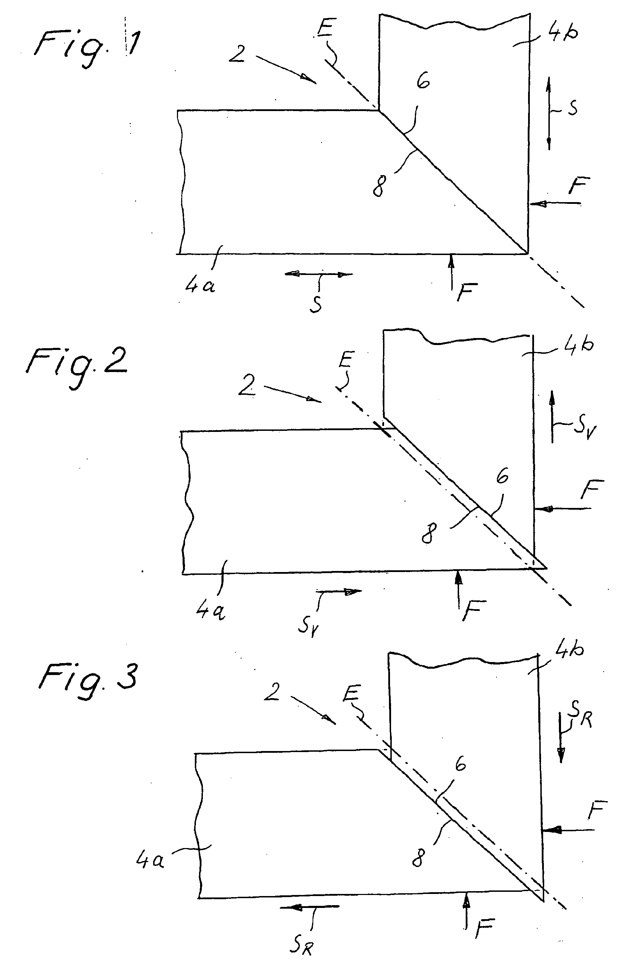

Figur 1 zeigt in schematischer Weise eine Gehrungs-Eckverbindung 2 zwischen zwei Bauteilen 4a, 4b, deren Gehrungsflächen 6, 8 durch Vibrationsschweißen miteinander zu verbinden sind. Im dargestellten Ausführungsbeispiel sind die Bauteile 4a, 4b als Rahmenteile eines im Übrigen nicht dargestellten rechteckigen Rahmens ausgebildet. Wie bereits eingangs erläutert, können die Bauteile 4a, 4b auch beliebige andere Bauteile sein, sofern sie nur durch Vibrationsschweißen miteinander verbindbar sind.

Die Bauteile 4a, 4b bestehen aus Kunststoff oder irgendeinem anderen Werkstoff, der sich für das Vibrationsschweißen eignet. In Frage kommen beispielsweise auch Holz und ein Verbundstoff aus Holz und Kunststoff. Zum Vibrationsschweißen geeignete Werkstoffpaarungen sind im Stand der Technik bekannt, so dass hierauf nicht weiter eingegangen wird.

Wie in Figur 1 zu sehen ist, sind die aneinander anliegenden Gehrungsflächen 6, 8 der Rahmenteile 4a, 4b vor dem Schweißvorgang in einer (gedachten) Gehrungsebene E angeordnet. Im dargestellten Ausführungsbeispiel schließen die Gehrungsflächen 6, 8 und damit die Gehrungsebene E jeweils mit der Längsrichtung der Rahmenteile 4a, 4b einen Gehrungswinkel von 45° ein. Der Gehrungswinkel kann jedoch auch von 45° verschieden sein, sofern nur die Gehrungsflächen 6, 8 schräg zur Längsrichtung des zugehörigen Rahmenteils 4a, 4b verlaufen.

Um die Rahmenteile 4a, 4b an ihren Gehrungsflächen 6, 8 durch Vibrationsschweißen miteinander zu verbinden, werden die Rahmenteile 4a, 4b in geradlinige translatorische Schwingungen versetzt. Wie durch die Doppelpfeile S angedeutet wird, verlaufen die translatorischen Schwingungen in Längsrichtungen der Rahmenteile 4a, 4b und somit parallel zur Rahmenebene (Zeichnungsebene der Figur 1). Das heißt, dass das Rahmenteil 4a (in Figur 1) in horizontaler Richtung schwingt, während das Rahmenteil 4b (in Figur 1) in vertikaler Richtung schwingt.

Die Figuren 2 und 3 zeigen die Lage der Rahmenteile 4a, 4b bei ihren Schwingungen in der einen Schwingungsrichtung Sᵥ und in der anderen Schwingungsrichtung S_{R}. In Figur 2 ist zu sehen, dass sich die Rahmenteile 4a, 4b in den Schwingungsrichtungen Sᵥ geradlinig so verschoben haben, dass sich ihre Gehrungsflächen 6, 8 quer zu der (gedachten) ortsfesten Gehrungsebene E bis zu einer Endstellung bewegt haben. Bei der Umkehrung der Schwingung verschieben sich die Rahmenteile 4a, 4b in der Schwingungsrichtung S_{R} geradlinig so, dass ihre Gehrungsflächen 6, 8 sich durch die ortsfeste Gehrungsebene E hindurch bewegen, bis sie ihre auf der anderen Seite der Gehrungsebene E liegende Endstellung erreichen, wie dies in Figur 3 zu sehen ist.

Diese linearen translatorischen Schwingungen der Rahmenteile 4a, 4b erfolgen mit gleicher Amplitude und gleicher Frequenz. Die Phasen der Schwingungen sind hierbei so aufeinander abgestimmt, dass die Gehrungsflächen 6, 8 der Rahmenteile 4a, 4b in Anlage aneinander bleiben, das heißt, dass die Gehrungsfläche 6 immer in die gleiche Richtung wie die Gehrungsfläche 8 schwingt. Hierbei führen die Gehrungsflächen 6, 8 eine Gleitbewegung relativ zueinander parallel zu der ortsfesten Gehrungsebene E aus, wie ein Vergleich der Figuren 2 und 3 ergibt. Diese Gleitbewegung der Gehrungsflächen 6, 8 ist Voraussetzung für die für das Vibrationsschweißen erforderliche Reibung zwischen den Rahmenteilen 4a, 4b.

Um die für den Aufschmelzvorgang erforderliche Reibkraft zu erzeugen, werden die Gehrungsflächen 6, 8 der Rahmenteile 4a, 4b während ihrer Schwingungen mit einem vorgegebenen Schweißdruck gegeneinander angedrückt. Dies wird bei dem dargestellten Ausführungsbeispiel dadurch erreicht, dass auf die Rahmenteile 4a, 4b während des Schweißvorganges jeweils eine Kraft F ausgeübt wird, deren Wirkungslinie jeweils senkrecht zu der Schwingungsrichtung S des betreffenden Rahmenteils 4a bzw. 4b verläuft.

Die Schwingungen der Rahmenteile 4a, 4b sollten so aufeinander abgestimmt werden, dass die Rahmenteile 4a, 4b und ihre Gehrungsflächen 6, 8 nach Beendigung des Schwingungsvorganges die in Figur 1 gezeigte Endlage einnehmen, in der die Gehrungsflächen 6, 8 exakt kongruent sind, das heißt vollflächig aneinander anliegen. Bei Verwendung herkömmlicher linearer Schwingköpfe wird dies automatisch dadurch erreicht, dass die Schwinger der Schwingköpfe aufgrund ihrer Federaufhängung in ihre Anfangsstellung "auspendeln". Grundsätzlich lässt sich dies auch durch ein gesteuertes bzw. geregeltes Abbremsen der Schwinger erzielen.

Die Schwingungsparameter liegen zweckmäßigerweise in den für das lineare Vibrationsschweißen üblichen Bereichen. Beispielhaft werden folgende Bereiche genannt:
Schwingungsfrequenz: 40 bis 250 Hz (z.B. 100 oder 240 Hz)
Schwingungsamplitude: 0,35 bis 2,0 mm (z.B. 0,6 mm)
Schweißzeit: 1 bis 10 s
Schweißkraft: 2,5 bis 30 kN

Bei dem in den Figuren 1 bis 3 dargestellten Ausführungsbeispiel führen die Rahmenteile 4a, 4b die translatorischen Schwingungen jeweils in ihrer Längsrichtung (Doppelpfeile S) aus. Es sei jedoch darauf hingewiesen, dass sich im Prinzip das gleiche Schweißverfahren ergibt, wenn die Rahmenteile 4a, 4b nicht in ihren Längsrichtungen, sondern in ihren Querrichtungen, also senkrecht zu den Doppelpfeilen S, schwingen. Auch in diesem Fall führen die Gehrungsflächen 6, 8 die für den Reibschweißvorgang erforderlichen Gleitbewegungen relativ zueinander parallel zu der ortsfesten Gehrungsebene E aus, obwohl die Rahmenteile 4a, 4b ausschließlich geradlinigen translatorischen Schwingungen unterworfen werden.

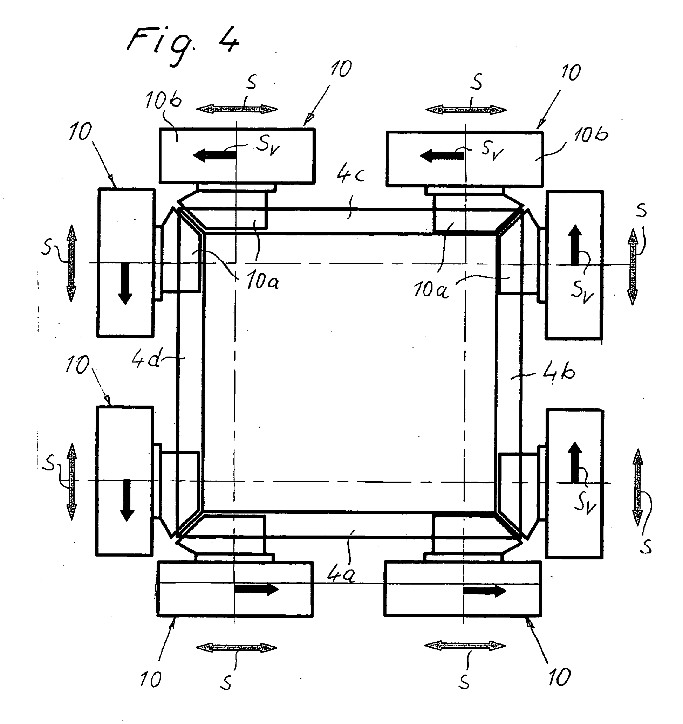

Das beschriebene Verfahren zum Herstellen der Gehrungs-Eckverbindung 2 wird vorzugsweise zum Herstellen vollständiger Rahmen eingesetzt, wie nun anhand der Figur 4 näher erläutert wird.

Figur 4 zeigt in schematischer Darstellung eine Vibrationsschweißanlage zum Herstellen eines Rahmens aus vier Rahmenteilen 4a, 4b, 4c, 4d, die durch vier Gehrungs-Eckverbindungen 2 miteinander verbunden werden. Bei dem Rahmen handelt es sich insbesondere um einen Rahmen für einen Tür- oder Fensterflügel; es sind jedoch auch andere Rahmen beispielsweise für Möbel, Bilder oder dergleichen denkbar.

Zum Herstellen der vier Gehrungs-Eckverbindungen 2 umfasst die in Figur 4 dargestellte Vibrationsschweißanlage acht linear arbeitende Schwingköpfe 10, die sich jeweils aus einem Schwinger 10a und einem stationären Teil 10b zusammensetzen. Die Schwingköpfe 10 sind so angeordnet, dass ihre Schwinger 10a jeweils an den Endbereichen der Rahmenteile 4a-d angreifen. Die Schwinger 10a der Schwingköpfe 10 und damit die Rahmenteile 4a-d können daher lineare translatorische Schwingungen in ihren Längsrichtungen ausführen, wie dies durch die Doppelpfeile S angedeutet ist und anhand der Figuren 1 bis 3 vorstehend beschrieben wurde.

Die Rahmenteile 4a-d werden von den Schwingern 10a der Schwingköpfe 10 durch Formschluss und/oder Reibschluss gehalten, wie dies beim Vibrationsschweißen üblich ist. Reibschluss lässt sich beispielsweise durch Einspannen der Rahmenteile an den Schwingern 10a herstellen. Formschluss lässt sich beispielsweise dadurch erzielen, dass die Schwinger 10a mittels Stiften fingerartig in Bohrungen der Rahmenteile 4a-d greifen, die quer zur Schwingungsrichtung der Rahmenteile verlaufen.

Um die vier Gehrungs-Eckverbindungen 2 des Rahmens gleichzeitig herzustellen, werden die acht Schwingköpfe 10 synchron zueinander betrieben. Das bedeutet, dass die Phasen der Schwingungen der acht Schwingungsköpfe 10 so aufeinander abgestimmt werden, dass ihre Schwinger 10a während ihrer einen Halbschwingung im Uhrzeigersinn und während ihrer anderen Halbschwingung entgegen dem Uhrzeigersinn schwingen, wie dies durch die Pfeile Sᵥ in Figur 4 angedeutet ist. Außerdem sind die Schwingungsfrequenzen und Schwingungsamplituden der acht Schwingköpfe 10 gleich. Wichtig hierbei ist, dass alle Schwingungen der Rahmenteile 4a-d rein lineare translatorische Schwingungen sind, so dass einfache lineare Schwingköpfe verwendet werden können.

Das Schweißen der vier Gehrungs-Eckverbindungen 2 kann ohne Scheibe oder mit in die Rahmenteile 4a-d eingelegter Scheibe erfolgen. Die für den Schweißvorgang erforderlichen Schwingungen der Rahmenteile 4a-d relativ zu einer eingelegten Scheibe kann beispielsweise dadurch ermöglicht werden, dass die Scheibe über elastische Dichtungen in den Rahmenteilen 4a-d abgestützt wird. Eine andere Möglichkeit besteht darin, dass die Glasscheibe mittels einer Saugnapfhalterung von einem Roboter ortsfest gehalten wird.

Ferner ist es möglich, zwei übereinander liegende Rahmen gleichzeitig herzustellen. Hierzu wären dann sechzehn Einzel-Schwingungsköpfe oder acht Doppel-Schwingungsköpfe erforderlich. Wenn in diesem Fall die Scheiben ebenfalls bereits in die Rahmenteile eingelegt sind, könnte die untere Scheibe auf einer ortsfesten Abstützung (Support) abgestützt werden und die obere Scheibe wiederum mittels einer Saugnapfhalterung von einem Roboter (Handlingssystem) gehalten werden.

Bei dem in Figur 4 gezeigten Ausführungsbeispiel sind acht Schwingköpfe 10 vorgesehen. Grundsätzlich wäre es auch möglich, nur vier Schwingköpfe vorzusehen, die in den mittleren Bereichen der Rahmenteile 4a, 4b, 4c, 4d angreifen. Im Übrigen könnte die Vibrationsschweißanlage auch so ausgebildet werden, dass die Rahmenteile 4a-d nicht in ihren Längsrichtungen, sondern in ihren Querrichtungen schwingen, wie dies vorstehend bereits erwähnt wurde. Auch in diesem Fall könnten entweder vier oder acht Schwingköpfe vorgesehen werden.

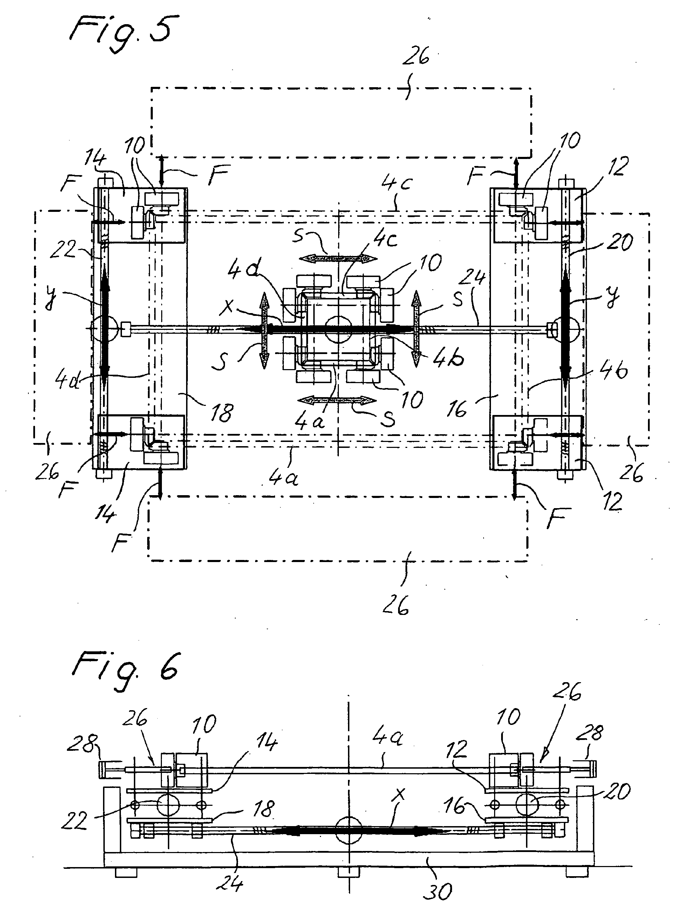

Die in Figur 4 dargestellte Vibrationsschweißanlage kann so ausgebildet werden, dass sie zum Herstellen von Gehrungs-Eckverbindungen unterschiedlich großer Rahmen verwendet werden kann. Eine entsprechend ausgebildete Vibrationsschweißanlage ist in schematischer Weise in den Figuren 5 und 6 dargestellt.

In der Mitte der Figur 5 ist eine Vibrationsschweißanlage mit acht Schwingköpfen 10 zum Herstellen eines Rahmens aus vier Rahmenteilen 4a-d entsprechend Figur 4 gezeigt. Die Schwingköpfe 10 nehmen hierbei Stellungen zum Verschweißen des kleinstmöglichen Rahmens ein. Durch strichpunktierte Linien ist dagegen der größtmögliche Rahmen angedeutet, der mit der Vibrationsschweißanlage der Figuren 5, 6 hergestellt werden kann. Die Abmessungen des kleinstmöglichen Rahmens und des größtmöglichen Rahmens betragen beispielsweise 400 mm x 400 mm bzw. 1000 mm x 1000 mm.

Um Rahmen dieser unterschiedlichen Größe schweißen zu können, sind die acht Schwingköpfe 10 entsprechend verstellbar. Zu diesem Zweck sind jeweils zwei einer Eckverbindung zugeordnete Schwingköpfe 10 auf einer Einzel-Trägerplatte 12 (rechte Seite in Figur 5) bzw. Einzel-Trägerplatte 14 (linke Seite in Figur 5) angeordnet. Die Einzel-Trägerplatten 12 wiederum sind auf einer Doppel-Trägerplatte 16 verschiebbar gelagert, und die Einzel-Trägerplatten 14 sind auf einer Doppel-Trägerplatte 18 verschiebbar gelagert. Um die Einzelträgerplatten 12 auf der Doppel-Trägerplatte 16 in γ-Richtung (siehe den mit y bezeichneten Doppelpfeil) verstellen zu können, ist eine Verstellvorrichtung 20 vorgesehen, die beispielsweise als Spindeltrieb ausgebildet ist. In gleicher Weise sind die Einzel-Trägerplatten 14 auf der Doppel-Trägerplatte 18 in y-Richtung durch eine Verstellvorrichtung 22 verstellbar, die ebenfalls als Spindeltrieb angedeutet ist.

Die beiden Doppel-Trägerplatten 16, 18 ihrerseits sind durch eine Stellvorrichtung 24 in x-Richtung (siehe den mit x bezeichneten Doppelpfeil) relativ zu einander verstellbar. Bei der Verstellvorrichtung 24 kann es sich ebenfalls um einen Spindeltrieb handeln.

Durch kombinierte Verstellbewegungen der Verstellvorrichtungen 20, 22 und 24 und damit der Einzel-Trägerplatten 12, 14 und Doppel-Trägerplatten 16, 18 lassen sich die acht Schwingköpfe 10 zwischen den in Figur 5 gezeigten Stellungen verstellen, um die Eckverbindungen für Rahmen unterschiedlicher Größe herstellen zu können.

In Figur 5 sind ferner in sehr schematischer Weise durch strichpunktierte Linien Pressvorrichtungen 26 angedeutet, die auf die Schwingköpfe 10 quer zu ihren Schwingungsrichtungen S Kräfte F (siehe die Doppelpfeile) ausüben, um den für den Vibrationsschweißgang erforderlichen Schweißdruck an den Gehrungsflächen (Fügeflächen) zu erzeugen. Die Pressvorrichtungen 26 können beispielsweise hydraulisch oder pneumatisch betätigte Stellzylinder 28 sein, wie dies in Figur 6 schematisch angedeutet ist. Die gesamte Vibrationsschweißanlage ist auf einem U-förmigen Maschinenrahmen 30 angeordnet, der ebenfalls in Figur 6 schematisch angedeutet ist.

## Patentansprüche

1. Verfahren zum Herstellen einer Gehrungs-Eckverbindung (2) zwischen zwei Bauteilen (4a, 4b) durch Vibrationsschweißen, bei dem aneinander anliegende Gehrungsflächen (6, 8) der beiden Bauteile (4a, 4b) vor Beginn des Schweißvorganges in einer gemeinsamen ortsfesten Gehrungsebene (E) liegen und während des Schweißvorganges durch Schwingungen der Bauteile unter vorgegebenem Schweißdruck aneinander gerieben werden, **dadurch gekennzeichnet, dass** die beiden Bauteile (4a, 4b) während des Schweißvorganges in aufeinander senkrecht stehende geradlinige translatorische Schwingungen (S) versetzt werden, deren Phasen so aufeinander abgestimmt sind, dass die Gehrungsflächen (6, 8) der beiden Bauteile (4a, 4b) quer zu der ortsfesten Gehrungsebene (E) und durch diese hindurch schwingen, wobei sie unter dem vorgegebenen Schweißdruck in Anlage bleiben.

2. Verfahren nach Anspruch 1, **dadurch gekennzeichnet, dass** die translatorischen Schwingungen der beiden Bauteile (4a, 4b) so synchronisiert werden, dass ihre Frequenzen und Amplituden gleich sind.

3. Verfahren nach Anspruch 1 oder 2 zum Herstellen einer Gehrungs-Eckverbindung (2) zwischen Bauteilen (4a, 4b), deren Längserstreckung größer als ihre Quererstreckung ist, **dadurch gekennzeichnet, dass** die translatorischen Schwingungen der Bauteile (4a, 4b) in ihren Längsrichtungen verlaufen.

4. Verfahren nach Anspruch 1 oder 2 zum Herstellen einer Gehrungs-Eckverbindung zwischen Bauteilen (4a 4b), deren Längserstreckung größer als ihre Quererstreckung ist, **dadurch gekennzeichnet, dass** die translatorischen Schwingungen der Bauteile (4a, 4b) in ihren Querrichtungen verlaufen.

5. Verfahren nach einem der vorhergehenden Ansprüche, **dadurch gekennzeichnet, dass** der Schweißdruck dadurch erzeugt wird, dass auf jedes der Bauteile (4a, 4b) eine Kraft (F) ausgeübt wird, die senkrecht zu der Schwingungsrichtung (S) des jeweiligen Bauteils verläuft.

6. Vorrichtung zum Herstellen einer Gehrungs-Eckverbindung (2) zwischen zwei Bauteilen (4a, 4b) durch Vibrationsschweißen, bei der aneinander anliegende Gehrungsflächen (6, 8) der Bauteile (4a, 4b) vor Beginn des Schwingungsvorganges in einer gemeinsamen ortsfesten Gehrungsebene (E) anordenbar und während des Schweißvorganges von Schwingköpfen (10) unter vorgegebenem Schweißdruck aneinander reibbar sind, **dadurch gekennzeichnet, dass** die Schwingköpfe (10) die Bauteile (4a, 4b) während des Schweißvorganges in aufeinander senkrecht stehende geradlinig translatorische Schwingungen (S) versetzbar sind, deren Phasen so aufeinander abgestimmt sind, dass die Gehrungsflächen (6, 8) der Bauteile (4, 4b) quer zu der ortsfesten Gehrungsebene (E) und durch diese hindurch schwingen, wobei sie unter dem vorgegebenen Schweißdruck in Anlage bleiben.

7. Vorrichtung nach Anspruch 6 zum Herstellen von vier Gehrungs-Eckverbindungen (2) zwischen vier Rahmenteilen (4a, 4b, 4c, 4d) eines Rahmens, **dadurch gekennzeichnet, dass** zum Erzeugen der translationsförmigen Schwingungen der vier Rahmenteile (4a, 4b, 4c, 4d) mindestens vier Schwingköpfe (10) einer Vibrationsschweißanlage vorgesehen sind, die so synchronisierbar sind, dass die Frequenzen und Amplituden der Schwingungen gleich sind.

8. Vorrichtung nach Anspruch 6 oder 7, **dadurch gekennzeichnet, dass** für jedes Rahmenteil (4a, 4b, 4c, 4d) zwei Schwingköpfe (10) vorgesehen sind, so dass jeweils die beiden Endbereiche des betreffenden Rahmenteils angreifbar sind.

9. Vorrichtung nach einem der Ansprüche 6 bis 8, **dadurch gekennzeichnet, dass** die Schwingköpfe (10) durch Verstellvorrichtungen (20, 22, 24) verstellbar sind, um Eckverbindungen für Rahmen unterschiedlicher Größe herstellen zu können.

10. Vorrichtung nach Anspruch 8 und 9, **dadurch gekennzeichnet, dass** die beiden Schwingköpfe (10) jeder Gehrungs-Eckverbindung (2) jeweils auf einer von vier Einzel-Trägerplatten (12, 24) gelagert sind und dass jeweils zwei Einzel-Trägerplatten (12, 14) auf einer Doppel-Trägerplatte (16, 18) gelagert sind, wobei die beiden Doppel-Trägerplatten (16, 18) in einer vorgegebenen Richtung (x) relativ zueinander verstellbar sind und die Einzel-Trägerplatten (12, 14) jeweils auf der zugehörigen Doppel-Trägerplatte (16, 18) relativ zueinander in einer Richtung (y) senkrecht zu der vorgegebenen Richtung (x) verstellbar sind.

11. Vorrichtung nach einem der Ansprüche 6 bis 10, **dadurch gekennzeichnet, dass** zum Erzeugen des Schweißdruckes Pressvorrichtungen (26) vorgesehen sind, mit denen auf die zugehörigen Schwingköpfe (10) eine Kraft (F) ausübbar ist, die jeweils senkrecht zu der Schwingrichtung des betreffenden Schwingkopfes (10) verläuft.

12. Vorrichtung nach einem der Ansprüche 6 bis 11, **dadurch gekennzeichnet, dass** während des Schweißvorganges eine in die Rahmenteile (4a, 4b, 4c, 4d) einlegbare Scheibe durch elastische Dichtungen in den Rahmenteilen abstützbar oder durch eine unmittelbar an der Scheibe angreifende Halterung ortsfest haltbar ist.

13. Vorrichtung nach einem der Ansprüche 6 bis 12, **dadurch gekennzeichnet, dass** zum Herstellen von Gehrungs-Eckverbindungen zweier übereinander liegender Rahmen sechzehn Einzel-Schwingköpfe oder acht Doppel-Schwingköpfe vorgesehen sind, die so zueinander synchronisierbar sind, dass die Frequenzen und Amplituden der Schwingungen gleich sind.

14. Vorrichtung nach Anspruch 13, **dadurch gekennzeichnet, dass** während des Schweißvorganges eine in die Rahmenteile der beiden Rahmen eingelegte Scheibe von einer ortsfesten Abstützung und eine in die Rahmenteile der beiden Rahmen eingelegte obere Scheibe von einer Halterung eines Handlingssystems haltbar ist.

## Claims

1. A method for producing a mitered corner joint (2) between two components (4a, 4b) by vibration welding, in which mutually contacting miter areas (6, 8) of the two components (4a, 4b) lie in a common fixed miter plane (E) before the start of the welding process, and during the welding process are rubbed against each other through oscillations of the components under prescribed welding pressure, **characterized in that** during the welding process the two components (4a, 4b) are set into mutually perpendicular straight-line translational oscillations (S), whose phases are matched to each other so that the miter areas (6, 8) of the two components (4a, 4b) oscillate transverse to the fixed miter plane (E), and through this plane, wherein said areas remain in contact under the prescribed welding pressure.

2. The method according to Claim 1, **characterized in that** the translational oscillations of the two components (4a, 4b) are synchronized such that their frequencies and amplitudes are the same.

3. The method according to Claim 1 or 2 for producing a mitered corner joint (2) between components (4a, 4b) whose longitudinal extent is larger than their transverse extent, **characterized in that** the translational oscillations of the components (4a, 4b) proceed in their longitudinal directions.

4. The method according to Claim 1 or 2 for producing a mitered corner joint between components (4a, 4b) whose longitudinal extent is larger than their transverse extent, **characterized in that** the translational oscillations of the components (4a, 4b) proceed in their transverse directions.

5. The method according to one of the preceding Claims, **characterized in that** the welding pressure is created **in that** a force (F), which is applied perpendicularly to the oscillation direction (S) of the respective component, is exerted on each of the components (4a, 4b).

6. An apparatus for producing a mitered corner joint (2) between two components (4a, 4b) by vibration welding, in which mutually contacting miter areas (6, 8) of the components (4a, 4b) are arrangeable in a common fixed miter plane (E) before the start of the welding process, and during the welding process are rubbable against each other by oscillating heads (10) under prescribed welding pressure, **characterized in that** during the welding process the oscillating heads (10) can set the components (4a, 4b) into mutually perpendicular straight-line translational oscillations (S), whose phases are matched to each other so that the miter areas (6, 8) of the components (4a, 4b) oscillate transverse to the fixed miter plane (E), and through this plane, while remaining in contact under the prescribed welding pressure.

7. The apparatus according to Claim 6 for producing four mitered corner joints (2) between four frame parts (4a, 4b, 4c, 4d) of a frame, **characterized in that** for creating the translation-shaped oscillations of the four frame parts (4a, 4b, 4c, 4d) at least four oscillating heads (10) of a vibration welding system are provided that can be synchronized such that the frequencies and amplitudes of the oscillations are the same.

8. The apparatus according to Claim 6 or 7, **characterized in that** for each frame part (4a, 4b, 4c, 4d) two oscillating heads (10) are provided so that each of the two end regions of the affected frame parts is engageable.

9. The apparatus according to one of the Claims 6 to 8, **characterized in that** the oscillating heads (10) can be displaced by positioning devices (20, 22, 24) in order to be able to produce corner joints for frames of different sizes.

10. The apparatus according to Claim 8 and 9, **characterized in that** the two oscillating heads (10) of each mitered corner joint (2) are supported in each case on one of four individual carrier plates (12, 24), and that in each case two individual carrier plates (12, 14) are supported on a double carrier plate (16, 18), wherein the two double carrier plates (16, 18) can be moved relative to each other in a prescribed direction (x), and the individual carrier plates (12, 14), in each case, can be moved on the associated double carrier plate (16, 18) relative to each other in a direction (y), perpendicular to the prescribed direction (x).

11. The apparatus according to one of the Claims 6 to 10, **characterized in that** for creating the welding pressure pressing devices (26) are provided by means of which a force (F) is exertable on the associated oscillating heads (10), where said force is applied perpendicularly to the oscillating direction of the affected oscillating head (10).

12. The apparatus according to one of the Claims 6 to 11, **characterized in that** during the welding process a pane is insertable in the frame parts (4a, 4b, 4c, 4d) that is supportable in the frame parts by elastic seals, or is holdable fixed by a fixture engaging directly on the pane.

13. The apparatus according to one of the Claims 6 to 12, **characterized in that** for producing mitered corner joints of two frames lying upon each other, sixteen individual oscillating heads or eight double oscillating heads are provided that can be synchronized to each other so that the frequencies and amplitudes of the oscillations are the same.

14. The apparatus according to Claim 13, **characterized in that** during the welding procedure a pane that is inserted in the frame parts of the two frames is holdable by a fixed support and an upper pane that is inserted in the frame parts of the two frames is holdable by a fixture of a handling system.

## Revendications

1. Procédé pour manufacturer une liaison en onglet (2) entre deux éléments de construction (4a, 4b) par soudage d'oscillation, dans lequel des surfaces d'onglet (6, 8) des deux éléments de construction (4a, 4b) en appui l'une contre l'autre se situent avant le début de la procédure de soudage dans un plan d'onglet (E) commun fixe et, pendant la procédure de soudage, sont frottées l'une contre l'autre par des vibrations des éléments de construction sous une pression de soudage prédéterminée, **caractérisé en ce que** les deux éléments de construction (4a, 4b) pendant la procédure de soudage sont soumis à des vibrations (S) translationnelles rectilignes perpendiculaires les unes aux autres, dont les phases sont accordées les unes aux autres de telle sorte que les surfaces d'onglet (6, 8) des deux éléments de construction (4a, 4b) vibrent transversalement au plan d'onglet (E) fixe et à travers celui-ci, tout en restant en appui sous la pression de soudage prédéterminée.

2. Procédé selon la revendication 1, **caractérisé en ce que** les vibrations translationnelles des deux éléments de construction (4a, 4b) sont synchronisées de telle façon que leurs fréquences et amplitudes sont égales.

3. Procédé selon la revendication 1 ou 2 pour manufacturer une liaison en onglet (2) entre des éléments de construction (4a, 4b) dont l'extension longitudinale est supérieure à leur extension transversale, **caractérisé en ce que** les vibrations translationnelles des éléments de construction (4a, 4b) vont dans leurs directions longitudinales.

4. Procédé selon la revendication 1 ou 2 pour manufacturer une liaison en onglet entre des éléments de construction (4a 4b), dont l'extension longitudinale est supérieure à leur extension transversale, **caractérisé en ce que** les vibrations translationnelles des éléments de construction (4a, 4b) vont dans leurs directions transversales.

5. Procédé selon l'une des revendications précédentes, **caractérisé en ce que** la pression de soudage est générée par le fait qu'est exercée sur chaque élément de construction (4a, 4b) une force (F) qui va perpendiculairement à la direction de vibration (S) de l'élément de construction respectif.

6. Dispositif pour manufacturer une liaison en onglet (2) entre deux éléments de construction (4a, 4b) par soudage d'oscillation, dans lequel des surfaces d'onglet (6, 8) des éléments de construction (4a, 4b) en appui l'une contre l'autre peuvent être disposées avant le début de la procédure de vibration dans un plan d'onglet (E) commun fixe et, pendant la procédure de soudage, être frottées l'une contre l'autre par des têtes vibrantes (10) sous une pression de soudage prédéterminée, **caractérisé en ce que**, pendant la procédure de soudage, les têtes vibrantes (10) soumettent les éléments de construction (4a, 4b) à des vibrations (S) translationnelles rectilignes perpendiculaires les unes aux autres, dont les phases sont accordées les unes aux autres de telle sorte que les surfaces d'onglet (6, 8) des éléments de construction (4, 4b) vibrent transversalement au plan d'onglet (E) fixe et à travers celui-ci, tout en restant en appui sous la pression de soudage prédéterminée.

7. Dispositif selon la revendication 6 pour manufacturer quatre liaisons en onglet (2) entre quatre parties de cadre (4a, 4b, 4c, 4d) d'un cadre, **caractérisé en ce que** pour générer les vibrations en forme de translation des quatre parties de cadre (4a, 4b, 4c, 4d) au moins quatre têtes vibrantes (10) d'une installation de soudage d'oscillation sont prévues, qui peuvent être synchronisées de telle façon que les fréquences et amplitudes des vibrations sont égales.

8. Dispositif selon la revendication 6 ou 7, **caractérisé en ce que** pour chaque partie de cadre (4a, 4b, 4c, 4d) deux têtes vibrantes (10) sont prévues de sorte que respectivement les deux zones d'extrémité de la partie de cadre concernée peuvent être attaquées.

9. Dispositif selon l'une des revendications 6 à 8, **caractérisé en ce que** les têtes vibrantes (10) sont ajustables par des dispositifs d'ajustage (20, 22, 24) pour pouvoir manufacturer des liaisons en onglet pour des cadres de tailles différentes.

10. Dispositif selon les revendications 8 et 9, **caractérisé en ce que** les deux têtes vibrantes (10) de chaque liaison en onglet (2) sont logées respectivement sur l'une de quatre plaques de support uniques (12, 24) et **en ce que** respectivement deux plaques de support uniques (12, 14) sont logées sur une plaque de support double (16, 18), dans lequel les deux plaques de support doubles (16, 18) sont ajustables l'une par rapport à l'autre dans une direction prédéterminée (x) et les plaques de support uniques (12, 14) sont ajustables respectivement sur la plaque de support double (16, 18) correspondante l'une par rapport à l'autre dans une direction (y) perpendiculaire à la direction (x) prédéterminée.

11. Dispositif selon l'une des revendications 6 à 10, **caractérisé en ce que** pour générer la pression de soudage, des dispositifs de compressions (26) sont prévus, avec lesquels une force (F) s'étendant respectivement perpendiculairement à la direction de vibration de la tête vibrante (10) concernée peut être exercée sur les têtes vibrantes (10) correspondantes.

12. Dispositif selon l'une des revendications 6 à 11, **caractérisé en ce que** pendant la procédure de soudage un disque insérable dans les parties de cadre (4a, 4b, 4c, 4d) peut être supporté par des joints élastiques dans les parties de cadre ou peut être retenu fixe par une fixation agissant directement sur le disque.

13. Dispositif selon l'une des revendications 6 à 12, **caractérisé en ce que** pour manufacturer des liaisons en onglet de deux cadres posés l'un sur l'autre, seize têtes vibrantes uniques ou huit têtes vibrantes doubles sont prévues qui peuvent être synchronisées les unes avec les autres de sorte que les fréquences et amplitudes des vibrations sont égales.

14. Dispositif selon la revendication 13, **caractérisé en ce que** pendant la procédure de soudage un disque inséré dans les parties de cadre des deux cadres peut être retenu par un support fixe et un disque supérieur inséré dans les parties de cadre des deux cadres peut être retenu par une fixation d'un système de manipulation.
